# NEUE EUROPÄISCHE PATENTSCHRIFT

(11) **EP 3 296 676 B2**
(45) Veröffentlichungstag und Bekanntmachung des Hinweises auf die Entscheidung über den Einspruch: **28.08.2024**
(45) Hinweis auf die Patenterteilung: 30.06.2021
(21) Anmeldenummer: 17189725.9
(22) Anmeldetag: 07.09.2017
(51) Int. Cl.: F28D 7/00, F28D 7/16, B01D 5/00, C01B 21/26, C01B 21/28, B01J 19/00, F28D 21/00

(54) **ANORDNUNG UND VERFAHREN ZUR KONDENSATION EINES HEISSEN SAUREN GEMISCHS**
ARRANGEMENT AND METHOD FOR CONDENSING A HOT ACID MIXTURE
ARRANGEMENT ET PROCÉDÉ DE CONDENSATION D'UN MÉLANGE ACIDE CHAUD

(30) Priorität: 16.09.2016 DE 102016217765
(43) Veröffentlichungstag der Anmeldung: 21.03.2018
(73) Patentinhaber: thyssenkrupp Uhde GmbH, 44141 Dortmund (DE); thyssenkrupp AG, 45143 Essen (DE)
(72) Erfinder: Groves, Michael, 58285 Gevelsberg (DE)
(74) Vertreter: Gulde & Partner

(56) Entgegenhaltungen:
- EP-A1- 0 213 669
- EP-A1- 3 032 209
- WO-A1-2013/165246
- AT-B- 319 275
- DE-B3- 102007 006 889
- FR-A- 1 285 548
- GB-A- 456 446
- GB-A- 652 346
- GB-A- 905 597
- US-A- 1 814 010
- US-A- 4 354 040
- GROVES MICHAEL C.E., SASONOW ALEXANDER: "Uhde EnviNO x ® technology for NO X and N 2 O abatement: a contribution to reducing emissions from nitric acid plants", JOURNAL OF INTEGRATIVE ENVIRONMENTAL SCIENCES, vol. 7, no. sup1, 1 August 2010 (2010-08-01), pages 211 - 222, ISSN: 1943-815X, DOI: 10.1080/19438151003621334
- MAURER R: "New Technological Concept for Nitric Acid: The Compact Nitric Acid Plant ", 8 April 2000 (2000-04-08), Retrieved from the Internet <URL:http://www.diquima.upm.es/old_diquima/docencia/tqi/docs/nitricac_cmpct.pdf>
- THYSSENKRUPP: "Nitric Acid", BROCHURE, 22 January 2009 (2009-01-22), pages 1 - 20
- "Ullmann's Encyclopedia of industrial chemistry", 1 January 2012, Weinheim , article MICHAEL THIEMANN ET AL.: "Nitric Acid, Nitrous Acid, and Nitrogen Oxides", pages: 177 - 225
- "Shell and tube heat exchanger ", WIKIPEDIA, 5 June 2016 (2016-06-05), Retrieved from the Internet <URL:https://en.wikipedia.org/w/index.php?title=Shell_and_tube_heat_exchanger&oldid=723880888>
- Screen print from opening the D2 file with Foxit pdf editor/reader, and selecting File>Properties
- Austin, D. G. "Chemical Engineering Drawing Symbols" Halsted Press, 1979 particular relevance pages 3-5
- Presentation by Prof. Dr. Hartmut Wesenfeld (available from 2015)

## Beschreibung

Beschrieben ist eine Anordnung zur kontrollierten Kondensation eines heißen sauren Gasgemischs, insbesondere von stickoxidhaltigen Gasen bei der Herstellung von Salpetersäure aus Ammoniak durch Oxidation mit Luft oder einem oxidierenden Gas, umfassend mindestens eine Abkühlvorrichtung, in der das heiße Gasgemisch mittels eines Kühlmittels abgekühlt und kondensiert wird, wobei die mindestens eine Abkühlvorrichtung als Rohrbündelwärmetauscher mit einer Mehrzahl im Wesentlichen parallel zueinander angeordneter Rohre ausgebildet ist, wobei die mindestens eine Abkühlvorrichtung eine erste Abkühlvorrichtung ist und eine zweite, in Strömungsrichtung bezogen auf das heiße Gasgemisch der ersten Abkühlvorrichtung nachgeschaltete, Abkühlvorrichtung vorgesehen ist, die mit der ersten Abkühlvorrichtung strömungstechnisch verbunden ist, wobei die zweite Abkühlvorrichtung im Wesentlichen zylindrisch gestaltet ist und ihre Achse im Wesentlichen quer zur Achse der ersten Abkühlvorrichtung verläuft. Gegenstand der vorliegenden Erfindung ist ein Verfahren zur kontrollierten Kondensation eines heißen sauren Gasgemischs.

Bei der Herstellung von Salpetersäure nach dem Ostwald-Verfahren wird durch die Oxidation von Ammoniak in Luft-Sauerstoff oder in speziellen Fällen in anderen sauerstoffhaltigen Gemischen wie beispielsweise Wasserdampf und Sauerstoff oder mit Sauerstoff angereicherter Luft ein Gasgemisch gebildet, das Stickoxide, Wasserdampf, Sauerstoff und andere, an den Folgereaktionen nicht beteiligte Stoffe, enthält. Die Stickoxide, die für das aktuelle Problem relevant sind, sind Stickstoffmonoxid (NO), Stickstoffdioxid (NO2 ), Distickstoffoxid (N2 O), Distickstofftetroxid (N2 O4 ) und Distickstofftrioxid (N2 O3 ), die unter den entsprechenden Bedingungen bei Reaktion mit Wasser und ggf. Sauerstoff entstehen, wobei diese wässrige Lösungen von Salpetersäure (HNO3 ) und salpetriger Säure bilden. Das bei der Ammoniakoxidation gebildete Gasgemisch ist zunächst heiß- typischerweise im Bereich von etwa 900 °C - und wird in der Anlage durch Wärmeaustausch mit anderen Stoffströmen in geeigneten Apparaten abgekühlt. Außer der Wärmerückgewinnung ist ein weiteres Ziel der Abkühlung, eine wässrige, salpetersäurehaltige Lösung zu erhalten, die dann in weiteren Schritten auf die gewünschte Endkonzentration der Produktsäure aufkonzentriert wird.

Der Kondensationsschritt ist kritisch, denn bei ungeschickter Ausführung kann das Säurekondensat in dem noch heißen stickoxidhaltigen Gasstrom so weit aufgeheizt werden, dass es sehr korrosiv auf die Edelstahl-Werkstoffe wirkt, die üblicherweise in diesem Bereich verwendet werden. Alternative Werkstoffe, die sehr beständig gegen diese Art des Angriffs sind, sind zwar bekannt, beispielsweise kommt Zirkonium in Betracht. Diese Werkstoffe sind jedoch sehr teuer. Die Korrosion tritt durch ein erneutes Verdampfen der Säure insbesondere dann auf, wenn sehr heiße nitrose Gase vorhanden sind und das Kondensat der Salpetersäure nicht von diesen heißen Gasen wegströmen kann. Dies ist zum Beispiel im Bereich horizontaler Flächen der Abkühlvorrichtung der Fall, an denen sich Kondensat sammeln kann.

Die WO 01/68520 A1 beschreibt beispielsweise typische herkömmliche Verfahren zur Herstellung von Salpetersäure durch Oxidation von Ammoniak mit Luftsauerstoff.

Aus der DE 27 16 702 A1 ist grundsätzlich ein Rohrbündelwärmetauscher mit einer Mehrzahl im Wesentlichen parallel zueinander ausgerichteter Rohre bekannt, welcher für die Abkühlung aggressiver Medien geeignet ist, wobei das aggressive Medium über einen Mantelstutzen im Wesentlichen in vertikaler Strömung in den Wärmetauscher eintritt und über einen weiteren Mantelstutzen auch im Wesentlichen vertikal wieder nach unten hin austritt. Bei diesem bekannten Rohrbündelwärmetauscher sind jedoch die Innenrohre für den Wärmetausch horizontal ausgerichtet, das heißt die Innenrohre haben eine liegende (waagrechte) Anordnung und verlaufen quer zu den Mantelstutzen.

In der US 3,568,764 A werden ähnlich aufgebaute Rohrbündelwärmetauscher beschrieben, wobei hier das Restgas einer Salpetersäureanlage aufgeheizt wird, indem es im Wärmetausch zu dem heißen Prozessgas strömt, welches durch Oxidation von Ammoniak zu Stickstoffoxiden in der Anlage erzeugt wurde. Auch hier tritt das heiße Prozessgas über einen vertikalen Stutzen in den Wärmetauscher ein, während der kühle Gasstrom von unten her vertikal eintritt und über horizontale Rohre den Wärmetauscher durchströmt, um diesen nach Umlenkung an der Oberseite wieder zu verlassen. Das abgekühlte Prozessgas tritt über einen Rohrstutzen in vertikaler Strömung nach unten hin aus.

Aus der DE 10 2005 032 797 A1 ist ein Verfahren zur Kondensation von Schwefeltrioxid aus einem heißes Schwefeltrioxid enthaltenden Ausgangsgas bekannt, bei dem das schwefeltrioxidhaltige Ausgangsgas zunächst in einem ersten Wärmetauscher im Gegenstrom mit Luft heruntergekühlt wird, wobei teilweise Kondensat anfällt und dann das vorgekühlte schwefeltrioxidhaltige Gas in einem zweiten Wärmetauscher mit Luft weiter abgekühlt und in eine Kondensationsvorrichtung geleitet wird. Diese Kondensationsvorrichtung kann als Rohrbündelwärmetauscher ausgebildet sein.

In der EP 1 065 467 A2 werden Reaktoren beschrieben, bei denen ein heißes gasförmiges Fluid zunächst eine Reaktionszone und danach in der gleichen Apparatur eine Wärmetauschzone in vertikaler Richtung von oben nach unten durchströmt, wobei eine rasche Abkühlung von zuvor etwa 1400 °C auf unter 600 °C eintritt. Aufgrund der immer noch hohen Endtemperatur tritt hier keine Kondensation auf, sondern das abgekühlte Fluid verlässt die Wärmetauschzone in gasförmigem Zustand. Die hier beschriebenen Reaktoren mit Wärmetauscher werden in einem Verfahren zur Herstellung von Cyanwasserstoff eingesetzt.

Aus der GB 456,446 A ist eine Anordnung zur kontrollierten Kondensation eines heißen sauren Gasgemischs bekannt, bei der das Gasgemisch in einer ersten vertikal durchströmten Abkühlvorrichtung abgekühlt wird und stromabwärts dazu eine zweite Abkühlvorrichtung horizontal durchströmt wird, so dass die Achse der zweiten Abkühlvorrichtung quer zu derjenigen der ersten Abkühlvorrichtung verläuft. Jedoch ist zwischen den beiden Abkühlvorrichtungen eine längere Leitung angeordnet, in der das Gemisch umgelenkt wird, so dass die beiden Abkühlvorrichtungen nicht unmittelbar miteinander verbunden sind. Die erste Abkühlvorrichtung ist ein Wärmetauscher. Eine Kondensation des heißen Gasgemisches erfolgt jedoch erst in der zweiten Abkühlvorrichtung, so dass gasförmiges Gemisch über eine Teilstrecke in horizontaler Strömung durch die Leitung zwischen beiden Abkühlvorrichtungen strömt.

Die EP 0 213 669 A1 beschreibt ein Verfahren zur Herstellung von Harnstoff aus Ammoniak und Kohlendioxid, bei dem einer Synthesezone und einer Strippingzone zwei Kondensationszonen nachgeschaltet sind. Ein Gasgemisch aus der Strippingzone, welches Ammoniak, Kohlendioxid und Wasserdampf enthält, gelangt in den Schalenbereich einer ersten Kondensationszone, welche horizontal ausgerichtet ist. Ein nicht kondensierter Anteil des Gasgemisches wird dann in eine zweite Kondensationszone eingeleitet, in der eine weitere Kondensation einer Carbamatlösung erfolgt, wobei diese zweite Kondensationszone einen vertikal ausgerichteten Behälter aufweist.

Die Österreichische Patentschrift AT 319 275 B beschreibt eine Anordnung zur Herstellung von Salpetersäure mit mehreren Abkühlvorrichtungen, wobei eine erste Abkühlvorrichtung horizontal durchströmt wird und die dieser nachgeschaltete weitere Abkühlvorrichtung mit ihrer Achse vertikal und somit quer zu der ersten Abkühlvorrichtung ausgerichtet ist. Beide Abkühlvorrichtungen sind nebeneinander angeordnet. Die Rohre der ersten Abkühlvorrichtung verlaufen horizontal und das Gasgemisch tritt seitlich in die zweite Abkühlvorrichtung ein.

Die US-Schrift 4,354,040 A beschreibt ein Verfahren zur Herstellung von Harnstoff mit einer Vorrichtung zum Kondensieren von Carbamat, die als Wärmetauscher ausgebildet ist und deren Achse in vertikaler Richtung verläuft. Das Gasgemisch aus einem Stripper wird hier kondensiert und in einer wässrigen Lösung absorbiert. Unterhalb des ersten Wärmetauschers befindet sich ein zweiter Wärmetauscher innerhalb der gleichen Kondensationsvorrichtung, in dem Teile der zuvor nicht absorbierten Gase absorbiert werden. Auch bei dem zweiten unteren Wärmetauscher verläuft die Achse vertikal.

Die Aufgabe der vorliegenden Erfindung besteht darin, ein Verfahren zur kontrollierten Kondensation eines heißen sauren Gasgemischs zur Verfügung zu stellen, das wenig kostenintensiv ist und bei dem das Aufheizen des gebildeten Kondensats im Gasstrom mit Korrosionsangriff verhindert wird.

Die Lösung der vorgenannten Aufgabe liefert ein Verfahren zur kontrollierten Kondensation eines heißen sauren Gasgemischs mit den Merkmalen des Anspruchs 1.

Gemäß einer nicht zur Erfindung gehörenden Ausgestaltung ist vorgesehen, dass. die Rohre des Rohrbündelwärmetauschers der ersten Abkühlvorrichtung im Wesentlichen vertikal angeordnet sind die zweite Abkühlvorrichtung einen Behältermantel aufweist, den das heiße Gasgemisch durchströmt sowie einen Behälterinnenraum, den ein Kühlmittel durchströmt, wobei der Behältermantel der zweiten Abkühlvorrichtung an seiner Eingangsseite strömungstechnisch mit dem Austrittsstutzen der ersten Abkühlvorrichtung verbunden ist.

Gemäß einer nicht zur Erfindung gehörenden Ausgestaltung wird die Kondensation von Säure in der ersten Abkühlvorrichtung initiiert, wodurch das Kondensat ungehindert abfließen kann, so dass eine Aufkonzentrierung durch Wärmeübertrag aus dem heißen stickoxidhaltigen Gas gar nicht oder nur in geringem, für den korrosiven Angriff nicht schädlichen, Umfang erfolgen kann. In Teilen der Abkühlvorrichtung, wo ein Abfließen des Säurekondensats nicht möglich wäre, beispielsweise weil die Oberfläche dort waagrecht ist oder nicht selbstentleerende Vertiefungen aufweist, wird eine Kondensation von Flüssigkeiten von vornherein verhindert, da das Kühlmedium an solchen Stellen eine Temperatur oberhalb des Taupunktes des stickoxidhaltigen Gases aufweist. In den erfindungsgemäßen Abkühlvorrichtungen können als Kühlmedien flüssige oder gasförmige Materialien verwendet werden. Beispiele für geeignete Medien sind Kesselspeisewasser, das zur Dampferzeugung verwendet werden soll, vollentsalztes Wasser, Luft, Restgas oder andere gasförmige Medien.

Vorteilhaft ist daher, dass die oben beschriebene erste Abkühlvorrichtung mit mindestens einer zweiten Abkühlvorrichtung verbunden wird, in die das in der ersten Abkühlvorrichtung gebildete Säurekondensat abfließen kann und in die das teilweise abgekühlte stickoxidhaltige Gas hinein strömt.

In der zweiten Abkühlvorrichtung kann beispielsweise das stickoxidhaltige Gas unter die Tautemperatur abgekühlt werden, wobei mehr als die Hälfte der über 0 °C kondensierbaren Gase mit der Bildung von wässrigen Lösungen aus Salpetersäure, salpetriger Säure und Stickstoffoxiden auskondensiert.

Diese weitere Abkühlvorrichtung hat beispielsweise entweder integrierte oder der Abkühlvorrichtung nachgeschaltete Vorrichtungen zur Trennung des Säurekondensats von dem verbleibenden stickoxidhaltigen Gas.

Die nicht zur Erfindung gehörende Lösung hat den Vorteil, dass es möglich wird, den heißen Gasstrom so weit abzukühlen, dass seine Temperatur nur geringfügig höher liegt als die Tautemperatur des stickoxidhaltigen Gasstroms oder sogar unter dieser Temperatur. Das Abkühlen des stickstoffhaltigen Gases ist vom besonderen Vorteil, wenn das Gas in die zweite Vorrichtung zur weiteren Abkühlung geleitet wird und die zweite Abkühlvorrichtung gegebenenfalls Stellen aufweist, wo sich Säurekondensat sammeln kann, oder an den Innenwänden der zweiten Abkühlvorrichtung längere Zeit etwa als Tropfen hängen kann. Durch die vorherige Abkühlung des Gasstroms in der ersten Abkühlvorrichtung ist die Auswirkung des Aufheizens des Kondensats geringer und der Korrosionsangriff kleiner oder unbedeutend.

Ein wichtiger Vorteil ergibt sich somit aus der Tatsache, dass mit mindestens zwei Abkühlvorrichtungen gearbeitet werden kann und die Energieübertragung zwischen den Rohren, durch die das heiße Gasgemisch strömt, und dem Kühlmedium so eingestellt werden kann, dass bereits in der ersten Abkühlvorrichtung, d.h. in einem ersten Wärmetauscher, ein sicheres Durchschreiten des Taupunktes des heißen Gasgemischs erfolgt.

Die Rohre dieses Rohrbündelwärmetauschers sind im Wesentlichen vertikal angeordnet. Im Wesentlichen vertikal bedeutet, dass die Rohre entweder genau vertikal ausgerichtet verlaufen oder mit einer Winkelabweichung zur Vertikalen von vorzugsweise nicht mehr als etwa 40 Grad, insbesondere nicht mehr als 30 Grad, bevorzugt nicht mehr als 20 Grad, besonders bevorzugt nicht mehr als etwa 10 Grad. Beispielsweise erstrecken sich die Rohre im Wesentlichen über die gesamte Länge des Rohrbündelwärmetauschers in vertikaler Richtung.

Weiterhin ist bevorzugt diese Mehrzahl von Rohren des Rohrbündelwärmetauschers koaxial in einem im Wesentlichen zylindrischen Behälter angeordnet, den das abzukühlende Gasgemisch in axialer Richtung und in Schwerkraftrichtung über einen Eintrittsstutzen eintretend und über einen Austrittsstutzen austretend durchströmt.

Gemäß einer bevorzugten Weiterbildung der Erfindung umfasst die als Rohrbündelwärmetauscher ausgebildete Abkühlvorrichtung einen im Wesentlichen zylindrischen Behälter mit einem Behältermantel, den das Kühlmittel durchströmt.

Der vorgenannte Behältermantel weist dabei bevorzugt einen unteren Eintrittsstutzen für das Kühlmittel auf sowie einen oberen Austrittsstutzen und das Kühlmittel strömt bei dieser konstruktiven Variante im Gegenstrom zu dem die Rohre durchströmenden heißen Gasgemisch, welches durch die Rohre des Rohrbündelwärmetauschers bevorzugt etwa vertikal von oben nach unten strömt.

Der Behältermantel der zuvor beschriebenen Abkühlvorrichtung weist beispielsweise etwa in Querrichtung verlaufende Umlenkeinrichtungen für das Kühlmittel auf, so dass dieses den Behältermantel von seinem Eintrittspunkt bis zu seinem Austrittspunkt mäanderförmig durchströmt.

Weiterhin ist es so, dass die zweite Abkühlvorrichtung einen Behältermantel aufweist, den das heiße Gasgemisch durchströmt sowie einen Behälterinnenraum, den ein Kühlmittel durchströmt, wobei der Behältermantel der zweiten Abkühlvorrichtung an seiner Eingangsseite strömungstechnisch mit dem Austrittsstutzen des Rohrbündelwärmetauschers der ersten Abkühlvorrichtung verbunden ist. Bei dieser bevorzugten konstruktiven Ausführungsvariante der Erfindung ist es also so, dass das heiße Gasgemisch in der ersten Abkühlvorrichtung, in der es eine erste Abkühlung erfährt, zunächst rohrseitig strömt, während das Kühlmedium mantelseitig strömt, während in der zweiten Abkühlvorrichtung, in der die weitere Abkühlung erfolgt, das heiße Gasgemisch, gegebenenfalls aufgrund der bereits erfolgten Abkühlung im Gemisch mit Kondensat, mantelseitig strömt und das Kühlmittel durch Rohre strömt, die sich durch das Innere der Abkühlvorrichtung erstrecken. Gemäß einer nicht zur Erfindung gehörenden Weiterbildung ist die zweite Abkühlvorrichtung als Rohrbündelwärmetauscher mit einer Mehrzahl parallel zueinander angeordneter Rohre ausgebildet ist, welche von dem Kühlmittel durchströmt werden.

Bevorzugt ist dabei die Achse der parallelen Rohre des Rohrbündelwärmetauschers der zweiten Abkühlvorrichtung in Achsrichtung der Achse der zweiten Abkühlvorrichtung ausgerichtet und somit quer und etwa senkrecht zur Achse der Rohre des Rohrbündelwärmetauschers der ersten Abkühlvorrichtung.

Gegenstand der vorliegenden Erfindung ist ein Verfahren gemäß Anspruch 1 zur kontrollierten Kondensation eines heißen sauren Gasgemischs, insbesondere von stickoxidhaltigen Gasen bei der Herstellung von Salpetersäure aus Ammoniak durch Oxidation mit Luft oder einem oxidierenden Gas, bei dem in einer ersten Abkühlvorrichtung das heiße Gasgemisch mittels eines Kühlmittels abgekühlt und kondensiert wird, wobei das heiße Gasgemisch in der ersten Abkühlvorrichtung mittels eines Wärmetauschers in einer im Wesentlichen senkrecht gerichteten Abwärtsströmung fließend so weit abgekühlt wird, dass der Taupunkt des Gasgemisches mindestens teilweise unterschritten wird, wobei das aus der ersten Abkühlvorrichtung ausströmende bereits teilweise kondensierte Gemisch in eine zweite Abkühlvorrichtung gelangt, in der es weiter abgekühlt wird, wobei die zweite Abkühlvorrichtung unterhalb der ersten Abkühlvorrichtung angeordnet ist und wobei das bereits teilweise kondensierte Gemisch in einer im Wesentlichen vertikal nach unten gerichteten Strömung in die zweite Abkühlvorrichtung eintritt, wobei die erste Abkühlvorrichtung als Rohrbündelwärmetauscher mit einer Mehrzahl im Wesentlichen parallel zueinander angeordneter Rohre ausgebildet ist und die Rohre des Rohrbündelwärmetauschers der ersten Abkühlvorrichtung im Wesentlichen vertikal angeordnet sind, wobei die zweite Abkühlvorrichtung im Wesentlichen zylindrisch gestaltet ist und ihre Achse im Wesentlichen quer zur Achse der ersten Abkühlvorrichtung verläuft.

In einer im Wesentlichen vertikal nach unten gerichteten Strömung bedeutet, dass es sich entweder um eine genau vertikal nach unten hin gerichtete Strömung handelt oder eine Strömung mit einer Winkelabweichung zur Vertikalen von vorzugsweise nicht mehr als etwa 40 Grad, insbesondere nicht mehr als 30 Grad, bevorzugt nicht mehr als 20 Grad, besonders bevorzugt nicht mehr als etwa 10 Grad. Wichtig ist in diesem Zusammenhang, dass das bereits teilweise kondensierte Gemisch nach unten hin fließen kann und nicht in Bereichen der Vorrichtung kondensierte aggressive Flüssigkeit stehen und somit länger verweilen kann. In jedem Fall sollte es sich daher um eine Vorrichtung handeln, die ein ausreichendes und durchgehendes Gefälle aufweist, um eine solche Strömung des bereits teilweise kondensierten Gemisches zu gewährleisten.

Erfindungsgemäß ist vorgesehen, dass die erste Abkühlvorrichtung einen oberen Rohrboden aufweist und die Prozessbedingungen derart gewählt sind, dass die Temperatur dieses oberen Rohrbodens oberhalb des Taupunkts des heißen Gasgemischs liegt. In diesem (in der Regel waagrechten) oberen Rohrboden sind die oberen Endbereiche der Rohre des Rohrbündelwärmetauschers der ersten Abkühlvorrichtung gehalten. Durch diese Maßnahme erreicht man, dass sich kein Kondensat im Bereich des oberen Rohrbodens bilden und dort im heißen Gasstrom aufkonzentrieren kann.

Vorzugsweise erfolgt in der zweiten Abkühlvorrichtung eine Phasentrennung in eine nach unten hin über einen oder mehrere Stutzen austretende schwache salpetersaure Lösung und ein über wenigstens einen Stutzen nach oben hin austretendes NOx-haltiges Gasgemisch. Besonders bevorzugt wird das erfindungsgemäße Verfahren in einer Anordnung mit den zuvor beschriebenen Merkmalen durchgeführt.

Nachfolgend wird die vorliegende Erfindung anhand von Ausführungsbeispielen unter Bezugnahme auf die Zeichnungen näher erläutert. Dabei zeigen:
- Figur 1 eine schematisch vereinfachte Ansicht einer beispielhaften ersten Abkühlvorrichtung im Längsschnitt;
- Figur 2 eine schematische Abbildung, anhand derer die Vorgänge in einem einzelnen Rohr der ersten Abkühlvorrichtung erläutert werden;
- Figur 3 eine schematisch vereinfachte Ansicht einer Anordnung mit einer ersten und einer zweiten Abkühlvorrichtung gemäß einer beispielhaften;
- Figur 4 eine schematisch vereinfachte Schnittansicht der Anordnung von Figur 3 .

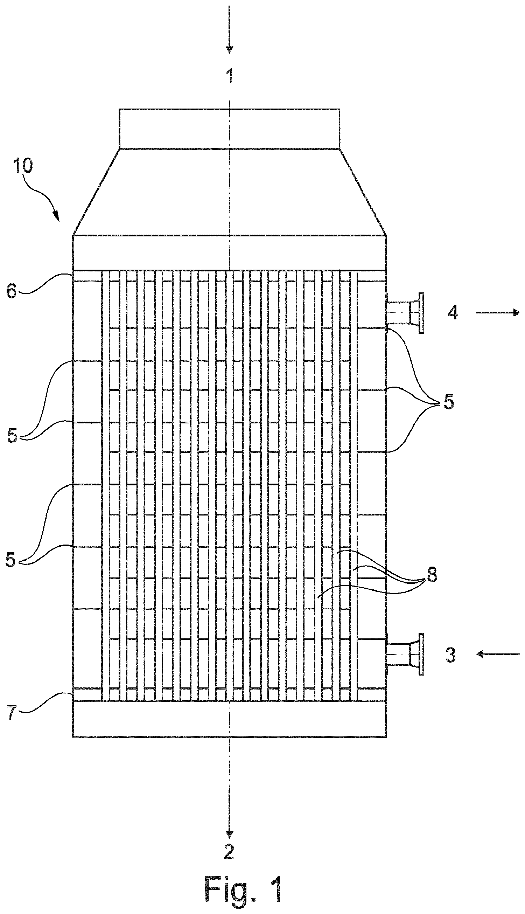

Zunächst wird nachfolgend unter Bezugnahme auf die Figur 1 ein erstes Ausführungsbeispiel der ersten Abkühlvorrichtung näher erläutert. Die darin stark schematisch vereinfacht dargestellte erste Abkühlvorrichtung 10 ist im Prinzip als eine Art Rohrbündelwärmetauscher ausgebildet, welcher eine Anzahl etwa parallel zueinander angeordneter und beispielsweise etwa vertikal angeordneter Rohre 8 umfasst. Diese Rohre 11 verlaufen zwischen einem oberen Rohrboden 6 und einem unteren Rohrboden 7 der Abkühlvorrichtung. Das heiße stickoxidhaltige Gas, das seinen Ursprung in der Oxidation von Ammoniak in sauerstoffhaltigem Gas hat, tritt durch einen oberen rohrseitigen Stutzen 1 in die erste Abkühlvorrichtung 10 ein. Das abgekühlte stickstoffhaltige Gas und das durch die Abkühlung gebildete Säurekondensat fließen nach unten hin aus den Rohren 8 der Abkühlvorrichtung 10 ab und verlassen die Abkühlvorrichtung durch den unteren Stutzen 2, der in dem vorliegenden Beispiel etwa den gleichen Durchmesser hat wie der Mantel der Abkühlvorrichtung 10 selbst. Selbstverständlich ist diese Dimensionierung kein notwendiges Merkmal der Anordnung.

Auf der Mantelseite der in Figur 1 dargestellten ersten Abkühlvorrichtung 10 fließt das Kühlmedium, in diesem Beispiel vollentsalztes Wasser (VE-Wasser), welches zur Dampferzeugung verwendet werden soll. Das VE-Wasser tritt in den unteren mantelseitigen Stutzen 3 der ersten Abkühlvorrichtung 10 bei einer Temperatur von beispielsweise 45 °C ein, die unter der Tautemperatur des stickoxidhaltigen Gases liegt. Das VE-Wasser wird durch mehrere Umlenkbleche 5 hin und her geleitet, so dass es immer wieder über die Rohre 8, in denen das heiße Medium fließt, geleitet wird. Bei jeder Umlenkung steigt das VE-Wasser in der ersten Abkühlvorrichtung 10 nach oben und gleichzeitig steigt die Temperatur des VE-Wassers an. Die Menge an VE-Wasser und die Gesamtwärmeaustauschfläche der Abkühlvorrichtung sind so auf die Menge, Zusammensetzung und Temperatur des eintretenden stickoxidhaltigen Gases abgestimmt, dass die Temperatur des VE-Wassers bei Erreichen des Raums zwischen oberstem Umlenkblech 5 und oberem Rohrboden 6 der ersten Abkühlvorrichtung 10 den Taupunkt des eintretenden stickoxidhaltigen Gases überschreitet. So ist die Bildung von Kondensat auf dem oberen Rohrboden 6 ausgeschlossen. Das VE-Wasser verlässt die erste Abkühlvorrichtung 10 durch den oberen beispielsweise außen radial angebrachten etwa horizontalen Stutzen 4 bei einer Temperatur von beispielsweise etwa 120 °C.

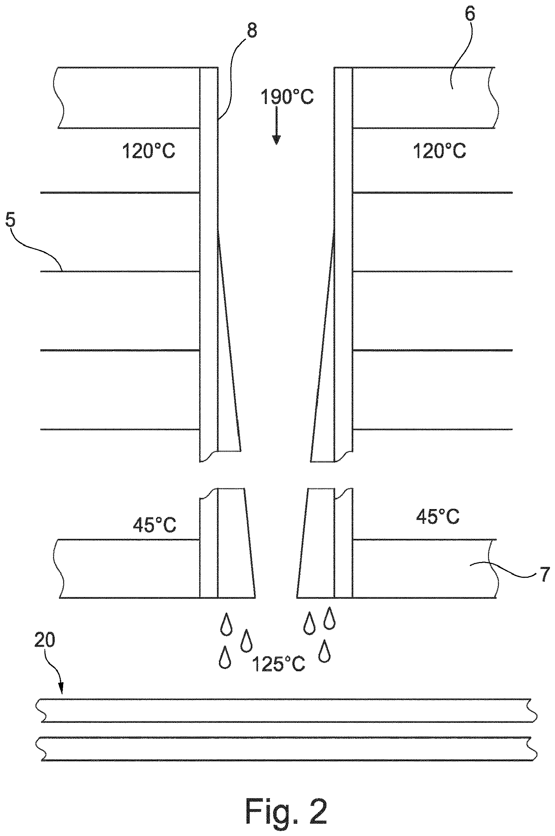

Nachfolgend wird auf die Figur 2 Bezug genommen und anhand dieser werden die Vorgänge in einem einzelnen Rohr des Rohrbündelwärmetauschers 10 erläutert. Das einzelne Rohr ist hier verkürzt dargestellt und man erkennt den oberen Rohrboden 6 am oberen Ende des Rohrs 8 sowie den unteren Rohrboden 7 am unteren Ende des Rohrs, in die das Rohr jeweils eingelassen ist. Das stickoxidhaltige Gas tritt in das Rohr 8 oben mit einer Temperatur von beispielsweise 190 °C ein. Die Temperatur des oberen Rohrbodens 6 der ersten Abkühlvorrichtung 10 liegt zwischen der Temperatur des stickoxidhaltigen Gases (z.B. 190 °C) und der des VE-Wassers (z.B. 120 °C). Es bildet sich kein Kondensat auf der oberen Seite des oberen Rohrbodens 6, weil seine Temperatur höher ist als die Tautemperatur (z.B. 95 °C). Während das stickoxidhaltige Gas nach unten durch das Rohr 8 fließt, wird es abgekühlt. Die Innenwandtemperatur des Rohrs 8 ist kälter als das stickoxidhaltige Gas. An einem bestimmten Punkt unterschreitet die Innenwandtemperatur den Taupunkt (z.B. ca. 95 °C). des stickoxidhaltigen Gases und erstes Kondensat bildet sich an der Innenwand des Rohres 8. Das Kondensat kann ungehindert zusammen mit dem stickoxidhaltigen Gas durch das Rohr 8 herabfließen. Je weiter unten das Gas fließt, umso kühler wird es und umso mehr Kondensat bildet sich. Beide Phasen, Flüssigkeit und Gas verlassen das Rohr 8 am unteren Ende. Zu keiner Zeit wird das Säurekondensat in heißem Gasstrom wesentlich aufgeheizt, so dass es nicht zu einem Korrosionsangriff kommt.

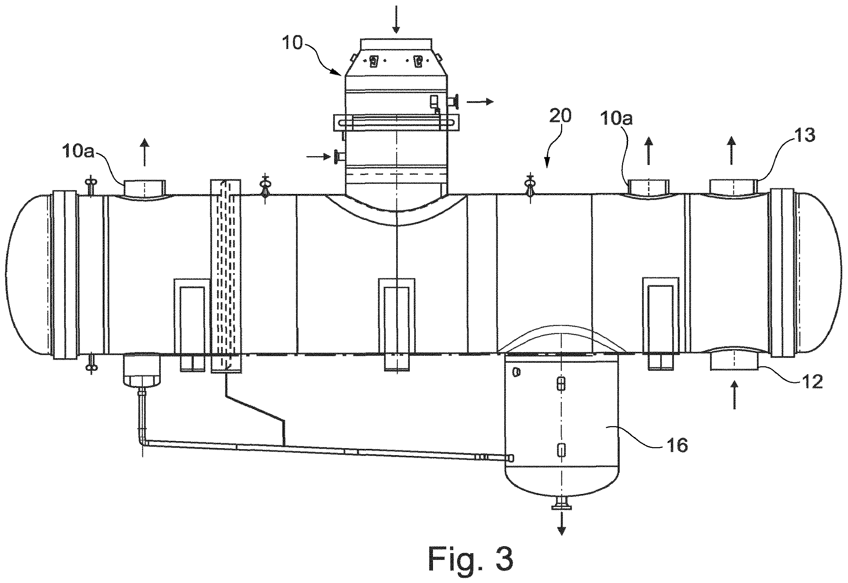

In dem erfindungsgemäßen Beispiel finden weitere Kondensation und Abkühlung in einer zweiten Abkühlvorrichtung 20 statt, welche wie man aus Figur 3 erkennen kann, unter der ersten Abkühlvorrichtung 10 angeordnet ist. Im vorliegenden Ausführungsbeispiel werden das stickoxidhaltige Gas und das Kondensat auf der Mantelseite eines liegenden Rohrbündelwärmeüberträgers gegen rohrseitiges Kühlwasser abgekühlt. Schließlich fließt das verbleibende stickoxidhaltige Gas aus einem oder mehreren dafür vorgesehenen oberen Stutzen 10 a der zweiten Abkühlvorrichtung 20 nach oben hin ab, während das Säurekondensat aus einem oder mehreren zu diesem Zweck vorgesehenen unteren Stutzen 16 in Pfeilrichtung 11 nach unten hin abfließt.

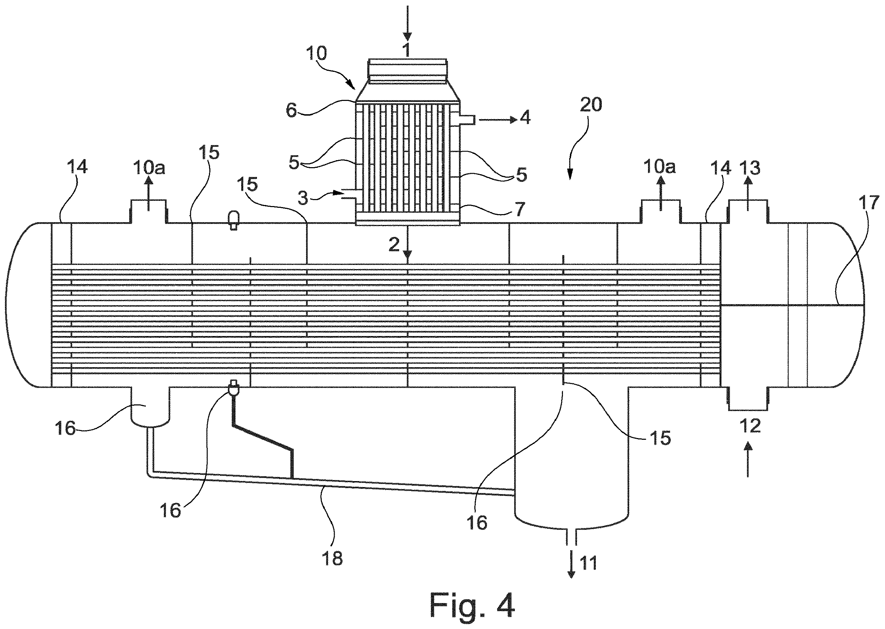

Diese zweite in den Figuren 3 und 4 dargestellte Abkühlvorrichtung 20 ist ein beispielsweise in seiner Grundform zylindrischer Behälter, dessen Achse jedoch etwa horizontal ausgerichtet ist, so dass es sich quasi um einen liegenden Behälter handelt, dessen Achse quer zu der Achse der ersten Abkühlvorrichtung 10 verläuft. Letztere ist beispielsweise etwa mittig auf der Oberseite der zweiten Abkühlvorrichtung 20 angeordnet, so dass von der ersten Abkühlvorrichtung 10 ablaufendes Kondensat im Gemisch mit noch unkondensiertem heißem Gas über den Stutzen 2 von oben her in Pfeilrichtung quasi radial in die zweite Abkühlvorrichtung einläuft. Während bei der ersten Abkühlvorrichtung 10 das heiße Gasgemisch in vertikaler Richtung durch die Rohre des Rohrbündelwärmetauschers strömt und außen im Mantelbereich der Vorrichtung das Kühlmittel strömt, ist es bei der zweiten Abkühlvorrichtung 20 umgekehrt. Das vertikal über den Rohrstutzen 2 einströmende Gas im Gemisch mit Kondensat gelangt in den Mantel der zweiten Abkühlvorrichtung, so dass schließlich das abgekühlte Säurekondensat nach unten hin über den unteren Stutzen 16 in Pfeilrichtung aus diesem Mantelbereich der Abkühlvorrichtung 20 abfließt. Das Kühlmittel strömt hingegen in der zweiten Abkühlvorrichtung 20 innen durch eine Mehrzahl etwa paralleler einzelner Rohre eines zweiten Rohrbündelwärmetauschers. Somit strömt das Kühlmittel in axialer Richtung zwischen zwei Rohrböden 14, in denen jeweils die Enden der einzelnen Rohre des Rohrbündelwärmetauschers fixiert sind. Das Kühlmittel strömt folglich in der zweiten Abkühlvorrichtung in etwa horizontaler Richtung. Ein verbesserter Wärmetausch mit dem über den Stutzen 2 oben eintretenden heißen Gemisch aus Gas und Kondensat findet dadurch statt, dass auch in der zweiten Abkühlvorrichtung 20 Umlenkbleche 15 eingebaut sind, die hier vertikal und jeweils mit Abstand voneinander verlaufen, so dass das heiße Gemisch aus Gas und Kondensat von der Mitte, wo es eintritt, zu beiden Seiten hin etwa mäanderförmig strömt, abwechselnd abwärts und aufwärts strömt und dabei immer wieder mit den Rohren, durch die das Kühlmittel fließt, in Kontakt kommt.

Bei jedem Gang zwischen den Umlenkblechen trennt sich das meiste Säurekondensat von dem Gas und fließt nach unten über die Rohre zum untersten Teil des Mantels. Ein geringer Anteil des Kondensats wird in den nächsten Gang mitgerissen. Die Umlenkbleche, die das Gas nach oben lenken, d.h. diejenigen, welche den unteren Teil des Mantels belegen, haben eine Öffnung am oder nahe am tiefsten Punkt, damit Kondensat unter dem jeweiligen Umlenkblech in Richtung eines der Stutzen 16 fließen kann, bzw. diese Umlenkbleche sind nicht bündig mit der Innenwand des Mantels aufgeführt, so dass der Spalt zwischen Umlenkblech und Mantel ausreichend groß ist, dass das Kondensat ungehindert in Richtung eines Stutzens 16 abfließen kann.

In der Zeichnung Figur 4 ist links ein kleinerer Stutzen 16 vorgesehen, über den Kondensat aufgefangen werden kann und dann über eine Verbindungsleitung 18 zu dem größeren Stutzen 16 geleitet werden kann, von wo es nach unten hin aus der zweiten Abkühlvorrichtung abfließt. Das stickoxidhaltige Gas steigt hingegen, nachdem es das letzte Umlenkblech 15 passiert hat, jeweils in den Endbereichen des Innenraums vor den Rohrböden 14 nach oben hin und strömt über die beiden oben angeordneten Stutzen 10 a aus der zweiten Abkühlvorrichtung 20 nach oben hin aus.

Das Kühlmittel gelangt in dem in der Figur 4 rechten Bereich in den Behälter der zweiten Abkühlvorrichtung 20 über den unteren Eintrittsstutzen 12, wo es mit niedriger Temperatur eintritt. Von dort aus strömt es durch eine erste Anzahl unterer paralleler Rohre des Rohrbündelwärmetauschers in axialer Richtung und somit horizontal in der Zeichnung nach links bis jenseits des linken Rohrbodens 14. Dort kann es über eine zweite Anzahl von Rohren (hier sind es insgesamt vier obere Rohre) wieder in horizontaler Richtung zurückströmen (in der Zeichnung nach rechts) bis zu dem rechten Rohrboden 14, wo es in eine obere Kammer für Kühlmittel gelangt, die über eine beispielsweise horizontale Trennwand 17 von einer unteren Kammer für Kühlmittel abgetrennt ist. Der untere Eintrittsstutzen 12 hat eine Fluidverbindung nur zu der unteren Kammer, wo das Kühlmittel nur bis zur Höhe der Trennwand 17 aufsteigen kann. Die obere Kammer oberhalb der Trennwand ist hingegen oberseitig mit einem Austrittsstutzen 13 versehen, so dass dort das erwärmte Kühlmittel aus der zweiten Abkühlvorrichtung 20 abfließen kann. In dieser Zeichnung ist die Kühlseite zweigängig ausgeführt. Andere Ausführungen mit beispielsweise eingängiger oder viergängiger Kühlung sind möglich.

Die Temperaturverhältnisse in den beiden strömungstechnisch hintereinander geschalteten Abkühlvorrichtungen 10 bzw. 20 sind so gewählt, dass in der ersten Abkühlvorrichtung 10 eine teilweise Abkühlung und teilweise Kondensation des heißen Gasgemisches stattfindet, wobei es in der ersten Abkühlvorrichtung praktisch nur eine vertikale Strömung von Gas und Kondensat gibt. Wenn das bereits teilweise abgekühlte Gas-Kondensat-Gemisch in die zweite Abkühlvorrichtung 20 eintritt, hat das Gas bereits durch die vorhergehende Abkühlung eine wesentlich geringere Temperatur.

Die Temperatur des über den oberen rohrseitigen Stutzen 1 in die erste Abkühlvorrichtung 10 eintretenden Gasstroms beträgt beispielsweise in etwa 190 °C. Der Druck des Gases liegt zum Beispiel bei etwa 4 bara. Die Tautemperatur des stickoxidhaltigen Gases, bei der sich Säurekondensat zu bilden anfängt, beträgt beispielsweise ca. 95 °C. Die Temperatur des über den Stutzen 2 aus der ersten Abkühlvorrichtung 10 austretenden Gasstromes und Säurekondensatstromes beträgt beispielsweise ca. 125 °C. Wenn dann Säurekondensat in der zweiten Abkühlvorrichtung 20 an eine Stelle gelangen sollte, wo es nicht frei abfließen kann, ist die Temperatur des stickoxidhaltigen Gases mit 125 °C bereits zu niedrig, um eine Korrosion dieser zweiten Abkühlvorrichtung in nennenswertem Ausmaß durch Aufheizen des Säurekondensats hervorzurufen.

### Bezugszeichenliste

- 1
- oberer rohrseitiger Stutzen
- 2
- unterer Stutzen
- 3
- unterer horizontaler mantelseitiger Stutzen
- 4
- oberer horizontaler mantelseitiger Stutzen
- 5
- Umlenkbleche
- 6
- oberer Rohrboden
- 7
- unterer Rohrboden
- 8
- einzelnes Rohr
- 10
- erste Abkühlvorrichtung
- 10 a
- obere Stutzen für NOx -Gas
- 12
- Eintrittsstutzen des Kühlmittels
- 13
- Austrittsstutzen des Kühlmittels
- 14
- Rohrboden
- 15
- Umlenkbleche
- 16
- Rohrstutzen für Säurekondensat
- 17
- horizontale Trennwand
- 18
- horizontale Trennwand
- 20
- zweite Abkühlvorrichtung

## Patentansprüche

1. Verfahren zur kontrollierten Kondensation eines heißen sauren Gasgemischs, insbesondere von stickoxidhaltigen Gasen bei der Herstellung von Salpetersäure aus Ammoniak durch Oxidation mit Luft oder einem oxidierenden Gas, bei dem in einer ersten Abkühlvorrichtung (10) das heiße Gasgemisch mittels eines Kühlmittels abgekühlt und kondensiert wird, wobei das heiße Gasgemisch in der ersten Abkühlvorrichtung (10) mittels eines Wärmetauschers in einer im Wesentlichen senkrecht gerichteten Abwärtsströmung fließend so weit abgekühlt wird, dass der Taupunkt des Gasgemisches mindestens teilweise unterschritten wird, wobei das aus der ersten Abkühlvorrichtung (10) ausströmende bereits teilweise kondensierte Gemisch in eine zweite Abkühlvorrichtung (20) gelangt, in der es weiter abgekühlt wird, wobei die zweite Abkühlvorrichtung unterhalb der ersten Abkühlvorrichtung angeordnet ist, wobei das bereits teilweise kondensierte Gemisch in einer im Wesentlichen vertikal nach unten gerichteten Strömung in die zweite Abkühlvorrichtung (20) eintritt, **dadurch gekennzeichnet, dass** die erste Abkühlvorrichtung (10) als Rohrbündelwärmetauscher mit einer Mehrzahl im Wesentlichen parallel zueinander angeordneter Rohre ausgebildet ist und die Rohre (8) des Rohrbündelwärmetauschers der ersten Abkühlvorrichtung (10) im Wesentlichen vertikal angeordnet sind, wobei die zweite Abkühlvorrichtung (20) im Wesentlichen zylindrisch gestaltet ist und ihre Achse im Wesentlichen quer zur Achse der ersten Abkühlvorrichtung verläuft und dass die erste Abkühlvorrichtung (10) einen oberen Rohrboden (6) aufweist und die Prozessbedingungen derart gewählt sind, dass die Temperatur dieses oberen Rohrbodens (6) oberhalb des Taupunkts des heißen Gasgemischs liegt.

2. Verfahren nach Anspruch 1, **dadurch gekennzeichnet, dass** in der zweiten Abkühlvorrichtung (20) eine Phasentrennung in eine nach unten hin über einen Stutzen austretende schwache salpetersaure Lösung und ein über wenigstens einen Stutzen nach oben hin austretendes NOx-haltiges Gasgemisch erfolgt.

## Claims

1. A method for controlled condensation of a hot acid gas mixture, in particular gases containing nitric oxides, in the production of nitric acid from ammonia through oxidation with air or an oxidizing gas, in which method the hot gas mixture is cooled and condensed in a first cooling device (10) by means of a coolant, wherein the hot gas mixture is flowingly cooled in the first cooling device (10) by means of a heat exchanger in a substantially vertically downward flow to the extent that the gas mixture is at least partially below its dew point, wherein the mixture flowing out of the first cooling device (10) and being already partially condensed enters into a second cooling device (20) in which it is cooled further, wherein the second cooling device is arranged under the first cooling device, wherein the already partially condensed mixture enters into the second cooling device (20) as a substantially vertically downward flow, **characterized in that** the first cooling device (10) is designed as a shell and tube heat exchanger with a plurality of tubes arranged substantially parallel to each other and the tubes (8) of the shell and tube heat exchanger of the first cooling device (10) are arranged substantially vertical, wherein the second cooling device (20) is designed to be substantially cylindrical and its axis runs substantially transverse to the axis of the first cooling device and **in that** the first cooling device (10) has an upper tube plate (6) and the process conditions are selected such that the temperature of said upper tube plate (6) is above the dew point of the hot gas mixture.

2. The method according to Claim 1, **characterized in that**, in the second cooling device (20), a phase separation is carried out into a weak nitric acid solution which is downwardly discharged via a nozzle and into a gas mixture containing NOx which is upwardly discharged via at least one nozzle.

## Revendications

1. Procédé de condensation contrôlée d'un mélange gazeux acide chaud, notamment de gaz contenant des oxydes d'azote lors de la production d'acide nitrique à partir d'ammoniac par oxydation avec de l'air ou un gaz oxydant, dans lequel, dans un premier dispositif de refroidissement (10), le mélange gazeux chaud est refroidi et condensé au moyen d'un agent réfrigérant, le mélange gazeux chaud étant refroidi de manière fluide dans le premier dispositif de refroidissement (10) au moyen d'un échangeur de chaleur dans un courant descendant orienté essentiellement verticalement dans une mesure telle que le point de rosée du mélange gazeux soit au moins partiellement dépassé vers le bas, le mélange déjà partiellement condensé sortant du premier dispositif de refroidissement (10) arrivant dans un deuxième dispositif de refroidissement (20) dans lequel il est encore refroidi, le deuxième dispositif de refroidissement étant agencé en dessous du premier dispositif de refroidissement, le mélange déjà partiellement condensé entrant dans le deuxième dispositif de refroidissement (20) dans un courant orienté essentiellement verticalement vers le bas, **caractérisé en ce que** le premier dispositif de refroidissement (10) est configuré sous forme d'échangeur de chaleur à faisceau de tubes avec une pluralité de tubes agencés essentiellement parallèlement les uns aux autres et les tubes (8) de l'échangeur de chaleur à faisceau de tubes du premier dispositif de refroidissement (10) sont agencés essentiellement verticalement, le deuxième dispositif de refroidissement (20) étant conçu sous forme essentiellement cylindrique et son axe étant essentiellement transversal à l'axe du premier dispositif de refroidissement, et **en ce que** le premier dispositif de refroidissement (10) présente une plaque tubulaire supérieure (6) et les conditions de traitement sont choisies de telle sorte que la température de cette plaque tubulaire supérieure (6) soit supérieure au point de rosée du mélange gazeux chaud.

2. Procédé selon la revendication 1, **caractérisé en ce que**, dans le deuxième dispositif de refroidissement (20), une séparation de phases est effectuée en une solution d'acide nitrique faible sortant vers le bas par une tubulure et en un mélange gazeux contenant des NOx sortant vers le haut par au moins une tubulure.
